# EUROPEAN PATENT APPLICATION

(11) **EP 2 423 262 A1**
(43) Date of publication of application: **29.02.2012**
(21) Application number: 10767024.2
(22) Date of filing: 19.04.2010
(51) Int. Cl.: C08L 69/00, C08G 64/06, C08K 5/103, C08K 5/13, C08K 5/3475, G02B 1/04, G02C 7/02

(54) **POLYCARBONATE RESIN COMPOSITION, METHOD FOR PRODUCING MOLDED ARTICLE USING SAME, AND OPTICAL LENS**

(30) Priority: 20.04.2009 JP 2009102120
(71) Applicant: Mitsubishi Gas Chemical Company, Inc., Tokyo 100-8324 (JP)
(72) Inventor: YOSHIDA Shu, Tokyo 125-0051 (JP); KATO Noriyuki, Tokyo 125-0051 (JP); FURUHASHI Hiroki, Tokyo 125-0051 (JP); KANEKO Kazuaki, Tokyo 125-0051 (JP); KAMEYAMA Keiichi, Tokyo 125-0051 (JP)
(74) Representative: HOFFMANN EITLE
(86) International application number: PCT/JP2010/056900
(87) International publication number: WO 2010/122967

(57) **Abstract**

To provide a polycarbonate resin which is excellent in transparency, hue and ultraviolet-resistance of the molded product, is excellent in retention-stability at a high temperature, and causes sufficiently-reduced amount of the dirt on the metal mold during molding.

A polycarbonate resin composition comprising A) a polycarbonate resin which is produced according to a melt method without adding any quencher, which comprises a constitution unit derived from 9,9-bis (4-(2-hydroxy ethoxy)phenyf)fluorene and a constitution unit derived from bisphenol A, B) a benzotriazole ultraviolet absorber, C) a mold release which is a partial ester formed of a C₁₀₋₂₀ monovalent fatty acid and glycerol, and D) a hindered phenol antioxidant.

## Description

### TECHNICAL FIELD

The present invention relates to a polycarbonate resin composition containing a predetermined polycarbonate resin. More specifically, the present invention relates to a polycarbonate resin composition suitable for use in the applications such as lenses, prisms, sheets and films to which transparency and hue-stability are required, which has a good hue-stability during molding and a good mold release property required in producing accurate molded products, and also contributes to reducing the dirt of a metallic mold during a continuous molding; and the present invention relates also to a molded product formed of the composition.

### BACKGROUND ART

Polycarbonate resins have been used for various optical materials in terms of their high transparency, excellent heat-resistance and mechanical properties. It has been known that, among them, the optical material such as an optical film, optical disk, optical prism and pickup lens suffers from various problems such as blurry image-points formed by light transmitting inside and errors in reading information, if its birefringence is large. Therefore, birefringent resins of which birefringence is low have been developed.

A polycarbonate copolymer resin, formed of a constitution unit derived from 9,9-bis (4-(2-hydroxy ethoxy)phenyl)fluorene and a constitution unit derived from bisphenol A (2,2-bis (4-hydroxy phenyl) propane), hardly develop birefringence according to a normal injection molding; and it can be used widely as an optical material such as a range of lenses, prisms and optical disk substrates (Patent Document 1). However, it easily deteriorates due to ultraviolet exposure, and easily becomes yellowish, and therefore, there has been limitation in use for exterior parts.

Usually, for the polycarbonate produced by polymerization according to a fusion-method, removing or deactivating the catalyst is preferable in terms of maintaining the heat stability and the hydrolytic stability. More specifically, the method wherein deactivation of the interesterification catalyst of an alkali metal, alkali-earth metal or the like is performed by addition of a known acid compound is usually used (Patent Document 2).

On the other hand, improvement of light resistance of the polycarbonate resin composition, having a predetermined formulation, has been performed by addition of the additive (Patent Document 3). However, even if a small amount of a usual benzotriazole or benzophenone ultraviolet absorber is added, it is extremely difficult to improve light resistance of such a polycarbonate resin composition with a predetermined formulation; or if a large amount thereof is added to compensate a lack of light resistance, mold defects or coloration occurs in the molded product, or large dirt occurs in the metal mold during continuous molding.

### PRIOR ART DOCUMENTS

### PATENT DOCUMENTS

[Patent Document 1] WO2007/142149 Pamphlet
[Patent Document 2] JP-A-7-165905
[Patent Document 3] JP-A-11-35815

### DISCLOSURE OF THE INVENTION

### PROBLEMS TO BE RESOLVED BY THE INVENTION

One object of the invention is to provide a polycarbonate resin composition which has better birefringence compared with a usual aromatic polycarbonate formed of bisphenol A, and a high retention-stability at a high temperature, and which are excellent in continuous-moldability, hue and light resistance.

### MEANS OF SOLVING THE PROBLEMS

The present inventors conducted studies in order to solve the above-described problems, and, as a result, found that a quencher, which has been generally considered necessary for polycarbonates produced according to a melt method, was one of the factors causing the dirt of a metallic mold. On the basis of this finding, they further conducted studies, and, as a result, found that it was possible to solve the above-described problems according to a composition comprising a benzotriazole ultraviolet absorber, a mold release of a partial ester, which is formed of a C₁₀₋₂₀ monovalent fatty acid and glycerol, and a hindered phenol antioxidant along with a polycarbonate copolymer having a predetermined aliphatic group which is produced according to a melt method without any quencher. On the basis of these findings, the present invention was made.

Namely, the present invention relates to a polycarbonate resin composition comprising:
A) 100 parts by weight of a polycarbonate copolymer which is produced according to a melt method without adding any quencher, which comprises 99 to 51 % by mole of a constitution unit derived from 9,9-bis (4-(2-hydroxy ethoxy)phenyl)fluorene represented by formula (1) and 1 to 49 % by mole of a constitution unit derived from bisphenol A represented by formula (2),
B) 0.01 to 1.0 part by weight of a benzotriazole ultraviolet absorber,
C) 0.005 to 1 part by weight of at least one species of a mold release which is a partial ester formed of a C₁₀₋₂₀ monovalent fatty acid and glycerol, and
D) 0.005 to 0.20 part by weight of at least one species of a hindered phenol antioxidant:

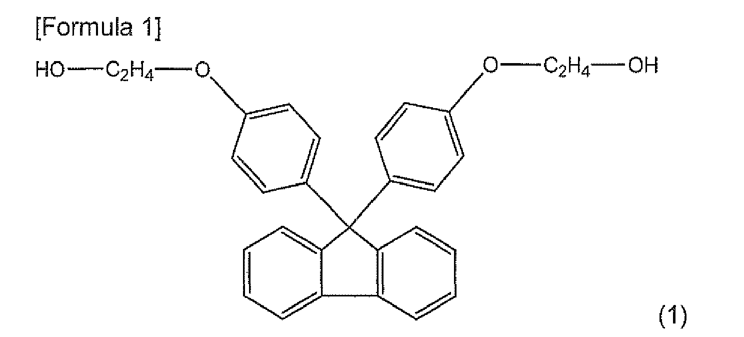

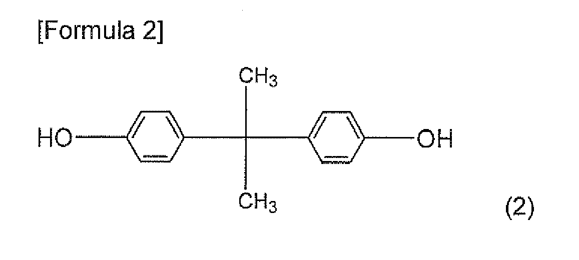

### EFFECT OF THE INVENTION

The polycarbonate resin composition of the present invention is excellent not only in transparency, heat-resistance and low-birefringence but also in ultraviolet-resistance, hue and retention-stability at a high temperature; and the dirt of the metal mold during molding is sufficiently reduced. Accordingly, it can be used preferably and widely as an optical material for use in in-vehicle lenses and covers, windowpanes, lenses for light, lenses for eyewear, covers for solar cell and touch panels

### MODE FOR CARRYING OUT THE INVENTION

The present invention is described in detail below.

### 1. Polycarbonate Resin Composition

### A) Polycarbonate Resin

The polycarbonate resin of the invention is a polycarbonate resin which is produced according to a melt method without adding any quencher, which comprises 99 to 51 % by mole of a constitution unit derived from 9,9-bis (4-(2-hydroxy ethoxy)phenyl)fluorene represented by formula (1) and 1 to 49 % by mole of a constitution unit derived from bisphenol A represented by formula (2).

The ratio of 9,9-bis (4-(2-hydroxy ethoxy)phenyl)fluorene and bisphenol A with respect to the total of all diol ingredients is preferably from 95 to 51 % by mole, more preferably from 95 to 65 % by mole, or most preferably from 95 to 80 % by mole. When an amount of the dihydroxy compounds is smaller than 51 % by mole, positive birefringence of an optical lens formed of the polycarbonate resin may be increased, which is not preferable. When an amount of the dihydroxy compounds is larger than 99 % by mole, negative birefringence of an optical lens formed of the polycarbonate resin may be increased, which is not preferable.

Examples of the diester carbonate include diphenyl carbonate, di tolyl carbonate, bis (chlorophenyl)carbonate, m-cresyl carbonate, dimethyl carbonate, diethyl carbonate, dibutyl carbonate, and dicyclohexyl carbonate. Among these, diphenyl carbonate is preferable especially. The diester carbonate is preferably used by a ratio of 0.97 to 1.20 moles, or more preferably 0.98 to 1.10 moles, with respect to 1 mole of the dihydroxy compounds.

The weight-averaged molecular weight (Mw) as a polystyrene-equivalent value of the polycarbonate resin of the present invention is preferably from 15,000 to 300,000, more preferably from 25,000 to 120,000. When the Mw is smaller than 15,000, the resin may become fragile, which is not preferable. When the Mw is larger than 300,000, extraction of the resin after producing it may become difficult because of the high melt-viscosity, and furthermore, the flowability may tend to be worsened, which may result in difficulty of injection molding in a melt state

The polycarbonate resin of the invention may have a random-, block- or alternating-copolymerization structure.

The glass-transition temperature (Tg) of the polycarbonate resin of the invention is preferably from 95 degrees Celsius to 180 degrees Celsius, or more preferably from 120 degrees Celsius to 160 degrees Celsius. When the Tg is lower than 95 degrees Celsius, the operating temperature range may be narrowed, which is not preferable. When the Tg is higher than 180 degrees Celsius, the conditions during molding may become stricter, which is not preferable.

The polycarbonate resin of the invention may be produced according to a known fusion polycondensation, in which two diol ingredients, 9,9-bis (4-(2-hydroxy ethoxy)phenyl)fluorene and bisphenol A, are reacted with diester carbonate in presence of a basic compound catalyst, interesterification catalyst, or mixed catalyst of both of them.

Alkali metal compounds, alkali earth metal compounds, nitrogen-containing compounds and the like are exemplified as an example of the basic compound catalyst. Among these, organic acid salts, inorganic salts, oxides, hydroxy compounds, hydrides or alkoxides of alkali metals and alkali-earth metals; quaternary ammonium hydroxides and salts thereof, amines and the like are used preferably; and such compounds may be used singly or in combination of two or more thereof.

Organic acid salts, inorganic salts, oxides, hydroxy compounds, hydrides, alkoxides, or the like of alkali metals are exemplified as the alkali metal compound.
In particular, sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium borophenylate; sodium benzoate, potassium benzoate, cesium benzoate, lithium benzoate, disodium hydrogenphosphate, dipotassium hydrogenphosphate, dilitthium hydrogenphosphate, disodium phenylphosphate, disodium, dipotassium, dicesium and dilithium salts of bisphenol A, and sodium, potassium, cesium and lithium salts of phenol may be used as the alkali metal compound.

Organic acid salts, inorganic salts, oxides, hydroxy compounds, hydrides, alkoxides, or the like of alkali earth metals are exemplified as the alkali earth metal compound.
In particular, magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium carbonate, calcium carbonate, strontium carbonate, barium carbonate, magnesium acetate, calcium acetate, strontium acetate, barium acetate, magnesium stearate, calcium stearate, calcium benzoate, and magnesium phenylphosphate may be used as the alkaline-earth metal compound.

Quaternary ammonium hydroxides and salts thereof, amines and the like are exemplified as the nitrogen-containing compound.
In particular, quaternary ammonium hydroxides having an alkyl or aryl such as tetramethylammonium hydroxide, tetraethylammonium hydroxide, tetrapropylammonium hydroxide, tetrabutylammonium hydroxide and trimethylbenzylammonium hydroxide; tertiary amines such as triethyl amine, dimethyl benzyl amine and triphenyl amine; secondary amines such as diethyl amine and dibutyl amine; primary amines such as propyl amine and butyl amine; imidazoles such as 2-methyl imidazole, 2-phenyl imidazole and benzoimidazole; and bases or basic salts such as ammonia, tetramethylammonium borohydride, tetrabutylammonium borohydride, tetrabutylammonium tetraphenylborate and tetraphenylammonium tetraphenylborate may be used as the nitrogen-containing compound.

As the interesterification catalyst, zinc salts, tin salts, zirconium salts and lead salts are preferable; and they may be used singly or in combination of two or more thereof.
In particular, zinc acetate, zinc benzoate, zinc 2-ethylhexanate, tin(II) chloride, tin(IV) chloride, tin(II) acetate, tin(IV) acetate, dibutyltin dilaurate, dibutyltin oxide, dibutyltin dimethoxide, zirconium acetylacetonato, zirconium oxyacetate, zirconium tetrabutoxide, lead(II) acetate and lead(IV) acetate are exemplified as an example of the interesterification catalyst.

The catalyst may be used in an amount of generally from 10⁻⁹ to 10⁻³ moles or so relative to 1 mol of the total of the dihydroxy compound, preferably from 10⁻⁷ to 10⁻⁴ moles or so.

According to a melt method, the melt-copolymerization of the raw materials and the catalyst is carried out under heat and under normal pressure or reduced pressure by interesterification along with removing the side product. The reaction is usually carried out according to a multistage process including two or more stages.

Specifically, the first stage reaction is carried out at a temperature of 120 to 260 degrees Celsius, preferably from 180 to 240 degrees Celsius, for 0.1 to 5 hours, preferably for 0.5 to 3 hours. Next, the temperature is gradually elevated while the pressure is gradually reduced, the reaction of the dihydroxy compounds and diester carbonate is carried out, and finally, the reaction is carried out at a temperature of from 200 to 350 degrees Celsius under a reduced pressure of at most 133.32 Pa for 0.05 to 2 hours.

Such a reaction may be carried out in a continuous method or a batchwise method. The reaction apparatus to be used for the above-mentioned reaction may be a vertical reactor equipped with an anchor-type stirring impeller, a Maxblend stirring impeller, a helical ribbon-type stirring impeller or the like, may be a horizontal reactor equipped with a paddle impeller, a lattice impeller, an eyeglass impeller or the like, or may be a extruder-type equipped with a screw..A reaction apparatus constructed by suitably combining these reactors in consideration of the viscosity of the polymer product is preferably used.

The step for removing the compounds having a low boiling point may be carried out by evaporation at a temperature of from 200 to 350 degrees Celsius under a pressure of from 13.33 to 133.32 Pa, and therefore, a horizontal reactor equipped with a paddle impeller, a lattice impeller, an eyeglass impeller or the like, which is excellent in surface-renewing ability, or a film evaporator is preferably used.

Usually, in a melt method, with the aim of deactivating the catalyst, any quencher is added to the reactor at the end of the reaction. Examples of the quencher include ammonium salts of sulfonic acid, phosphonium salts of sulfonic acid, and esters of sulfonic acid. Usually, for this purpose, 0.0001 to 0.5 parts by mass of the quencher is added with respect to 100 parts by weight of the produced polycarbonate copolymer. In the description, "without adding any quencher" means that any quencher is not added in an amount sufficient for deactivation of the catalyst. Accordingly, any embodiments, wherein any quencher is added in an amount extremely smaller than the above-described range or in an amount insufficient for deactivation of the catalyst, fall within the scope of the present invention. The embodiment wherein a smaller amount of the quencher is added is more preferable; and the embodiment wherein any quencher is not added at all is most preferable.

It is preferred that the amount of the foreign matter contained in the polycarbonate resin to be used in the present invention is extremely small, and filtration of the melt raw materials and catalyst liquid is preferably carried out. The mesh of the filter is preferably not more than 5 micro meters, or more preferably not more than 1 micro meter. Filtration of the produced resin via a polymer filter is preferably carried out. The mesh of the polymer filter is preferably not more than 100 micro meters, or more preferably not more than 30 micro meters. The step of extracting the resin pellets should be carried out under an environment with low dust; and a class of not more than 1000 is preferable, or a class of not more than 100 is more preferable.

### B) Ultraviolet Absorber

In the present invention, as the ultraviolet absorber to be added to, benzotriazole ultraviolet absorbers are preferably used.

Examples of the benzotriazole ultraviolet absorber include 2-(5-methyl-2-hydroxy phenyl)benzotriazole, 2-(2-hydroxy-4-octyloxy phenyl)benzotriazole, 2-[2-hydroxy-3,5-bis (α,α' dimethyl benzyl)phenyl]-2H-benzotriazole, 2-(3,5-di-t-butyl-2-hydroxy phenyl)benzotriazole, 2-(3-t-butyl-5-methyl-2-hydroxy phenyl)-5-chloro benzotriazole, 2-(3,5-di-t-butyl-2-hydroxy phenyl)-5-chloro benzotriazole, 2-(3,5-di-t-amyl-2-hydroxy phenyl)benzotriazole, 2-(2'-hydroxy-5'-t-octyl phenyl)benzotriazole, 2-[2-hydroxy-3-('3,4,5,6-tetra-hydro phthalimido methyl)-5-methyl phenyl]benzotriazole, 2,2'-methylene bis [4-(1, 1, 3, 3-tetramethyl butyl)-6-(2H-benzotriazole-2-yl)phenol], and methyl-3-[3-t-butyl-5-(2H-benzotriazole-2-yl)-4-hydroxy phenyl]propionate -polyethylene glycol condensation (molecular weight about 300).

Especially, 2-[2-hydroxy-3,5-bis (α, α dimethyl benzyl)phenyl]-2H-benzotriazole, 2-(2'-hydroxy-5'-t-octyl phenyl)benzotriazole or 2,2'-methylene bis [4-(1, 1, 3, 3-tetramethyl butyl)-6-(2H-benzotriazole-2-yl)phenol] is preferably used. These ultraviolet absorbers may be used singly or as a mixture of two or more thereof. An amount of the ultraviolet absorber to be added to is preferably from 0.001 to 2.0 parts by weight with respect to 100 parts by weight of the polycarbonate resin. More preferably, it is from 0.01 to 1.0 part by weight.

### C) Mold Release

The polycarbonate resin composition of the present invention contains C) at least one species of a mold release (occasionally, referred to as "fatty acid ester-base mold release" hereinafter) which is a partial ester formed of a C₁₀₋₂₀ monovalent fatty acid and glycerol. The term "C₁₀₋₂₀ monovalent fatty acid" means a fatty acid having a C₁₀₋₂₀ aliphatic group other than COOH. For example, capric acid (C₉H₁₉COOH), having a C₉-aliphatic group, doesn't fall within the scope of the C₁₀₋₂₀-monovalent fatty acid; and behenic acid (C₂₁H₄₃COOH), having a C₂₁-aliphatic group, doesn't fall within the scope of the C₁₀₋₂₀-monovalent fatty acid. When a partial ester, which is formed of a monovalent fatty acid having more than 20 carbon atoms and glycerol, is used as a fatty acid ester-base mold release, the dirt may occur in the metal mold during molding. On the other hand, a partial ester, which is formed of a monovalent fatty acid having less than 10 carbon atoms and glycerol, may not function as a mold release. Examples of the C₁₀₋₂₀ monovalent fatty acid include lauric acid, palmitic acid and stearic acid. The monovalent fatty acid may have a substituent other than carboxyl, and examples thereof include hydroxy. Preferable examples of the fatty acid ester-base mold release include an ester of glycerol and lauric acid, palmitic acid, stearic acid, or hydroxy fatty acid thereof. More preferable examples of the fatty acid ester-base mold release include an ester of glycerol and lauric acid. These esters are partial esters in which one or two hydroxyls of three hydroxyls in glycerol are esterized. Mono esters are preferable.
The fatty acid ester-base mold release may be used singly or in combination of two or more thereof.

0.001 to 0.5 parts by weight of C) the fatty acid ester-base mold release is preferably added with respect to 100 parts by weight of A) the polycarbonate copolymer. When it is smaller than 0.001 parts by weight, the mold release effect may not be obtained sufficiently; and when it is more than 0.5 parts by weight, the problems such as coloration of the composition and reduction of molecular weight may be caused.

### D) Antioxidant

The thermoplastic polymer composition of the present invention contains D) a hindered phenol antioxidant.

Examples of the hindered phenol antioxidant include triethylene glycol-bis [3-(3-t-butyl-5-methyl-4-hydroxy phenyl)propionate], 1,6-hexanediol-bis [3-(3,5-di-t-butyl-4-hydroxy phenyl)propionate], 2,4-bis-(n-octylthio)-6-(4-hydroxy-3,5-di-t-butyl anilino-1,3,5-triazine, pentaerythrityl tetrakis[3-(3,5-di-t-butyl-4-hydroxyphenyl)propionate], 2,2-thio-diethylene bis [3-Z(3,5-di-t-butyl-4-hydroxyphenyl)propionate], 2,2-thio-diethylene bis [3-(3,5-di-t-butyl-4-hydroxy phenyl)propionate], and octadecyl-3-(3,5-di-t-butyl-4-hydroxy phenyl)propionate. Especially, pentaerythrityl tetrakis[3-(3,5-di-t-butyl-4-hydroxyphenyl)propionate] and 2,2-thio-diethylene bis [3-Z(3,5-di-t-butyl-4-hydroxyphenyl)propionate] are preferably used.

The hindered phenol antioxidant may be used singly or in combination of two or more thereof.
0.001 to 0.5 parts by weight, or preferably 0.005 to 0.20 parts by weight, of D) the hindered phenol antioxidant is preferably added with respect to 100 parts by weight of A) the polycarbonate copolymer. When it is smaller than 0.001 parts by weight, the effect of preventing coloration during retention may not be obtained sufficiently; and when it is more than 0.5 parts by weight, the problems such as coloration of the composition and reduction of molecular weight may be caused.

Addition of the ultraviolet absorber, mold release and antioxidant to the polycarbonate resin may be carried out according to any known method. The method comprising adding the additives directly to the melt resin obtained at the completion of polymerization in a vertical or horizontal reactor or in an extruder, and pelletizing the mixture after cooling, is preferably used. Or after the melt resin obtained at the completion of polymerization is pelletized once, the ingredients are mixed and dispersed to the resin by a rapid mixer, as typified by a turmbull mixer, henschel mixer, ribbon-blender, or super mixer, and then are melt-mixed by an extruder, banbury mixer, roll or the like.

### 2. Molded Product And Process For Producing It

The present invention relates also to a molded product produced using the thermoplastic polymer composition of the present invention, and to a process for producing it. A) the polycarbonate copolymer contained in the polycarbonate resin composition of the present invention is low birefringence. Therefore, it is useful in preparation of molded products to be used in an optical application such as pickup lenses, optical lenses, optical prisms, optical sheets, optical films, light guide plates and optical disks. The polycarbonate resin composition of the present invention is excellent in moldability, and, more specifically, the thermoplastic polymer composition of the present invention exhibits a high heat resistance (or it shows little coloration due to heat) in a molding process, is excellent in mold releasability, and hardly causes adhesion on a metal mold. Therefore, the polycarbonate resin composition of the present invention is useful in preparation of accurate molded products having a complicated and precise shape, and especially, it is useful in preparation of micro lenses.

The molded product of the present invention may be produced according to any of various molding methods. More specifically, the molding process such as injection molding, injection compression molding, extrusion molding, hollow molding, rotational molding, compression molding may be used. In terms of productivity, the molded products are preferably produced by using pallets, which are prepared from the polycarbonate resin composition once, according to any one of the above-described processes. Furthermore, the desired molded products may be produced by using sheet-like molded products, which are produced from the polycarbonate resin composition once, according to vacuum molding, compressed-air molding or the like.

The molded products of the present invention are expected to be used not only in optic application parts but also in wide variety of applications such as electro/electron/office OA automation machines, medical parts, architect/construction products or household products.

### EXAMPLES

The present invention will be illustrated in further detail with reference to several examples below, which are not intended to limit the scope of the present invention. The evaluations of the obtained polycarbonate resin compositions were carried out according to the following methods.

(1) Molecular Weight: Using GPC (Shodex GPC system 11), the weight-averaged molecular weights (as a polystyrene-equivalent value) were measured. As a developing solvent, THF was used.
(2) Hue: Disk-like specimens with 50mmϕ and 3mm thickness were prepared from the obtained pellets according to injection molding, and the YI (yellowness) values thereof were measured by using a chromoscope (TC-1800MK2; manufactured by Tokyo Denshoku Co., Ltd.).
(3) Heat Resistance Test in A Molding Process: Pellets formed of the resin compositions were retained in an injecting-molding cylinder (260 degrees Celsius) for 30 minutes, and then, the YI values of the injection-molded specimens (50mmϕ, 3mm thickness) were measured.
(4) Light-Resistance Test: 3mm-circular form molded products formed of the resin compositions were subjected to irradiation via a filter for an outdoor solar radiation simulation with an irradiation energy of 250W/m² and a total irradiation energy of 3600kJ/m² by using "SUNTESTXLS+" manufactured by Nippon Seiki Co., Ltd.; and then, the variations of YI between before and after the irradiation were shown as dYI.
(5) Mold Releasability: Molding by an injection molding machine SG75 (manufactured by Sumitomo Heavy Industries Ltd.) and a cup-shaped anti-releasing metal mold under the condition of a cylinder temperature of 250 degrees Celsius, a metal-mold temperature of 70 degrees Celsius and an internal pressure of 400kgf/cm², the protrusion loads (kgf/cm²) applied to the protrusion pin were measured during molding into cup-shape molded products having a height of 20mm and a thickness of 4mm, and then, mold release resistances were calculated.
(6) Dirt of Metal Mold: Molding was carried out 2000 shots by using a molding machine of Mini 7 (manufactured by Niigata Engineering Co., Ltd.) and a drop-shaped metal-mold under the condition of a cylinder temperature of 250 degrees Celsius, a molding cycle of 11 seconds, a metal mold temperature of 80 degrees Celsius and a mold clamping force of 7 tons. After completion of the continuous molding, the nesting parts corresponding to the molded product bodies (corresponding to the convex side surfaces of the molded products), which were disposed on the metal-mold movable side, were removed from the metal mold; then, the adhesion matters were removed from the metal mold by washing the surface portion thereof with methylene chloride, and methylene chloride was evaporated from the obtained methylene chloride solution.

### Synthetic Example 1

15.46kg (35.26 moles) of 9,9-bis (4-(2-hydroxy ethoxy)phenyl)fluorene, 1.203kg (5.269 moles) of bisphenol A, 8.900kg (41.55 moles) of diphenyl carbonate, and 0.02043g (2.432×10⁻⁴ mole) of sodium hydrogen carbonate were put into a 50L-reaction container equipped with a stirrer and a distillation apparatus, and were heated at 215 degrees Celsius under stirring under a nitrogen atmosphere of 101325 Pa for an hour. After that, the degree of decompression was adjusted to 1998 Pa by taking 15 minutes, and then, interesterification was carried out under the condition of 215 degrees Celsius and 1998Pa kept for 20 minutes. Furthermore, the temperature was raised by 240 degrees Celsius at a rate of 37.5°C/hr, and 240 degrees Celsius and 15999Pa were kept for 10 minutes. After that, the pressure was adjusted to 133.32Pa by spending 40 minutes, and polymerization was carried out under the condition of 240 degrees Celsius and 133.32Pa for 10 minutes. After the completion of the polymerization, nitrogen gas was blown into the reaction container for pressurization, and the produced polycarbonate resin was extracted, and pelletized. The Mw of the obtained polycarbonate copolymer was 48,900.

### Example 1

0.03 part by weight of 2-[2-hydroxy -3,5-bis (α, α dimethyl benzyl)phenyl -2H-benzotriazole] (Tinuvin234, Ciba Specialty Chemicals K.K.), 0.05 part by weight of pentaerythrityl tetrakis[3-(3,5-di-t-butyl-4-hydroxy phenyl)propionate] (trade name: IRGANOX1010, Ciba Specialty Chemicals K.K.), as a hindered phenol antioxidant, and 0.075 part by weight of glycerin stearate (trade name: RIKEMAL S100A, RIKEN VITAMIN CO., LTD), as a mold release, were added to 100 parts by weight of the produced polycarbonate resin, and were compounded by a bent-type biaxial extruder (IPEC (completely-meshing and same-direction rotation) manufactured by Niigata Engineering Co., Ltd.), thereby to give a polycarbonate resin composition. The extrusion condition was that the discharge rate was 10kg/h, the screw rotation speed was 150rpm, the degree of vacuum in the bent was 3kPa, and the extrusion temperature from the first feed opening to the die portion was 260 degrees Celsius.

The YI value of the injection-molded specimen with a 3mm-thickness formed of the composition was 2.6. Regarding the light resistance, the increase of YI after being subjected to the UV irradiation test was small, 0.2. The YI value thereof was increased by +0.2 after being retained in the injection molding machine barrel for 30 minutes, which showed remarkably good heat-resistance property. The mold release resistance was small, 440kgf/cm², and the dirt found on the metal mold was very small, 1.3 mg.

### Examples 2-3

Polycarbonate compositions were obtained respectively in the same manner as Example 1, except that the additive was replaced as shown in Table 1. The evaluation results of the obtained resins were shown in Table 1.

### Comparative Example 1

Except that 0.005 part by weight of dodecylbenzenesulfonic acid tetrabutyl phosphonium salt, as a quencher, 0.03 part by weight of 2,2'-methylene bis [4-(1, 1, 3, 3-tetramethyl butyl)-6-(2H-benzotnazole-2-yl)phenol] (ADEKA STAB LA31, ADEKA Corporation), as a ultraviolet absorber, 0.05 part by weight of pentaerythrityl tetrakis[3-(3,5-di-t-buty)-4-hydroxy phenyl)propionate] (trade name: IRGANUX1010, Ciba Specialty Chemicals K.K.), as a hindered phenol antioxidant, and 0.075 part by weight of glycerin monolaurate (trade name: Poem M300, RIKEN VITAMIN CO., LTD), as a mold release, were added to 100 parts by weight of the produced polycarbonate resin, the resin composition was obtained in the same manner as Example 1. The YI value of the injection-molded specimen with a 3mm-thickness formed of the composition was 2.7. Regarding the light resistance, the increase of YI after being subjected to the UV irradiation test was slightly large, 1.5. The YI value thereof was increased by +2.5 after being retained in the injection molding machine barrel for 30 minutes, which was slightly large. Although the mold release resistance was small, 460kgf/cm², the dirt found on the metal mold was very large, 5.5 mg.

### Comparative Examples 2-5

Resin compositions were obtained respectively in the same manner as Example 1, except that the additive was replaced as shown in Table 2. The evaluation results were shown in Table 2. Not adding the ultraviolet absorber, the light resistance was worsened remarkably. Not adding the antioxidant, the YI value was worsened remarkably. Using glycerol monobehenate, 0.1 part by weight thereof was insufficient for obtaining the mold releasability. However, when the amount thereof was increased to 0.2 part by weight, dirt found on the metal mold was increased. Using glycerol monocaprate, 0.2 part by weight thereof was still insufficient for obtaining the mold releasability.

The symbols of the ingredients shown in Tables 1 and 2 are respectively as follows.

### (A Ingredient)

PC : Polycarbonate aliphatic/aromatic copolymer produced in Example 1

### (B Ingredient) UV Absorber

B-1: 2-(2'-hydroxy-5'-t-octyl phenyl)benzotriazole (Tinuvin329, Ciba Specialty Chemicals K.K.)
B-2: 2,2'-methylene bis [4-(1, 1, 3, 3-tetramethyl butyl)-6-(2H-benzotriazole-2-yl)phenol](ADEKA STAB LA31, ADEKA)
B-3: 2-[2-hydroxy-3,5-bis (α, α dimethyl benzyl)phenyl-2H-benzotriazole] (Tinuvin234, Ciba Specialty Chemicals K.K.) (C Ingredient) Mold Release Agent
C-1: Glycerol monostearate (RIKEMAL S100A, RIKEN VITAMIN CO., LTD)
C-2: Glycerol monolaurate (Poem M300, RIKEN VITAMIN CO., LTD)
C-3: Glycerol monopalmitate (Poem PV100, RIKEN VITAMIN CO., LTD)
C-4: Glycerol monobehenate (RIKEMAL B100. RIVEN VITAMIN CO., LTD)
C-5: Glycerol monocaprate (Poem M200, RIKEN VITAMIN CO., LTD)

### (D Ingredient) Hindered Phenol Antioxidant)

(D-1) pentaerythrityl tetrakis[3-(3,5-di-t-butyl-4-hydroxy phenyl)propionate]: Hindered Phenol Antioxidant (Irganox1010, Ciba Specialty Chemicals K.K.) (Quencher) DBSP: Dodecylbenzenesulfonic acid tetrabutyl phosphonium salt

As shown explicitly in Tables 1 and 2, it is understandable that the resin compositions of the present invention formed molded products having transparency, hue, mold releasability and weather resistance in appropriate balance. Especially, according to Comparative Examples, it was not possible to obtain any resin composition with a good hue causing little dirt of the metal mold and having a good retention-stability and light-stability.

**[Table 1]**

| | | | Example 1 | Example 2 | Example 3 | Example 4 | Example 5 | Example 6 |
|---|---|---|---|---|---|---|---|---|
| Formulation | Quencher | Type | - | - | - | - | - | - |
| | | Amount | - | - | - | - | - | - |
| | UV Absorber | Type | B-3 | B-1 | B-1 | B-2 | B-1 | B-2 |
| | | Amount | 0.03 | 0.03 | 0.03 | 0.03 | 0.03 | 0.03 |
| | Mold Release | Type | C-1 | C-1 | C-2 | C-2 | C-3 | C-3 |
| | | Amount | 0.06 | 0.06 | 0.075 | 0.075 | 0.05 | 0.05 |
| | Antioxidant | Type | D-1 | D-1 | D-1 | D-1 | D-1 | D-1 |
| | | Amount | 0.05 | 0.05 | 0.05 | 0.05 | 0.05 | 0.05 |
| Evaluation Result | YI | | 2.6 | 2.2 | 2.3 | 2.5 | 2.2 | 2.5 |
| | Mw | | 45100 | 44800 | 45100 | 44900 | 44800 | 45200 |
| | Light Resistance | dYI | 0.2 | 0.1 | 0.3 | 0.2 | 0.1 | 0.2 |
| | Heat Resistance in Molding Process | | 0.2 | 0.3 | 0.2 | 0.1 | 0.2 | 0.3 |
| | Mold Releasability | | 440 | 465 | 432 | 466 | 455 | 450 |
| | Dirt of Metal Mold | (Amount of adhesion matter: mg) | 1.3 | 0.9 | 1.7 | 1.1 | 0.9 | 0.8 |

**[Table 2]**

| | | | Comparative Example 1 | Comparative Example 2 | Comparative Example 3 | Comparative Example 4 | Comparative Example 5 | Comparative Example 6 |
|---|---|---|---|---|---|---|---|---|
| Formulation | | Type | DBSP | - | - | - | - | - |
| | Quencher | Amount | 0.005 | - | - | - | - | - |
| | UV | Type | B-2 | - | B-1 | B-1 | B-1 | B-1 |
| | Absorber | Amount | 0.03 | 0.03 | 0.03 | 0.03 | 0.03 | 0.03 |
| | Mold | Type | C-2 | C-2 | C-2 | C-4 | C-4 | C-5 |
| | Release | Amount | 0.075 | 0.075 | 0.075 | 0,1 | 0.2 | 0.1 |
| | Antioxidant | Type | D-1 | D-1 | - | D-1 | D-1 | D-1 |
| | | Amount | 0.05 | 0.05 | - | 0.05 | 0.05 | 0.05 |
| Evaluation Result | YI | | 2.7 | 2.6 | 3.3 | 2.9 | 2.2 | 2.5 |
| | Mw | | 45300 | 45100 | 43200 | 44800 | 44900 | 45100 |
| | Light Resistance | dYI | 1.5 | 3.0 | 3.2 | 0.6 | 0.6 | 0.8 |
| | Heat-Resistance in Molding Process | | 2.5 | 2.8 | 2.2 | 3.1 | 2.9 | 2.8 |
| | Mold Release Ability | | 460 | 444 | 463 | 566 | 456 | 575 |
| | Dirt of Metal Mold | (Amount of adhesion matter: mg) | 5.5 | 1.5 | 1.3 | 1.4 | 4.3 | 1.6 |

## Claims

1. A polycarbonate resin composition comprising:
A) 100 parts by weight of a polycarbonate resin which is produced according to a melt method without adding any quencher, which comprises 99 to 51 % by mole of a constitution unit derived from 9,9-bis (4-(2-hydroxy ethoxy)phenyl)fluorene represented by formula (1) and 1 to 49 % by mole of a constitution unit derived from bisphenol A represented by formula (2),
B) 0.01 to 1.0 part by weight of a benzotriazole ultraviolet absorber,
C) 0.005 to 1 part by weight of at least one species of a mold release which is a partial ester formed of a C₁₀₋₂₀ monovalent fatty acid and glycerol, and
D) 0.005 to 0.20 part by weight of at least one species of a hindered phenol antioxidant:

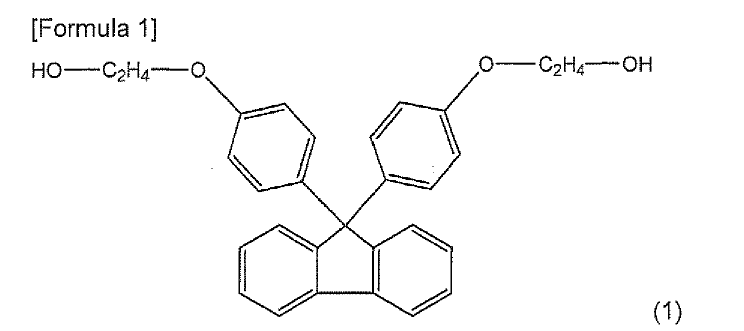

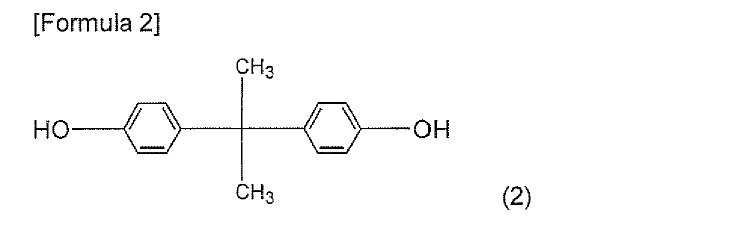

2. The polycarbonate resin composition of claim 1, wherein the B) a benzotriazole ultraviolet absorber is 2-(2'-hydroxy-5'-t-octyl phenyl)benzotriazole, or 2,2'-methylene bis [4-(1,1,3,3-tetrabutyl)-6-(2H-benzotriazole-2-yl)phenol]

3. The polycarbonate resin composition of claim 1, wherein the C) at least one species of a mold release is a glycerol monostearate or glycerol monolaurate.

4. The polycarbonate resin composition of claim 1, wherein the D) at least one species of a hindered phenol antioxidant is pentaerythrityl tetrakis[3-(3,5-di-t-butyl-4-hydroxy phenyl)propionate].

5. A process for producing a molded product comprising using a polycarbonate resin composition of any one of claims 1-4.

6. An optical lens formed of a polycarbonate resin composition of any one of claims 1-4.
